# EUROPÄISCHE PATENTANMELDUNG

(11) **EP 0 995 721 A2**
(43) Veröffentlichungstag der Anmeldung: **26.04.2000**
(21) Anmeldenummer: 99120760.6
(22) Anmeldetag: 20.10.1999
(51) Int. Cl.: C02F 3/12, C02F 1/24

(54) **Verfahren zum Rückhalten von in Wasser suspendierten, Biomasse bildenden Mikroorganismen in einem Becken**

(30) Priorität: 21.10.1998 DE 19848346
(71) Anmelder: Müller-Blanke, Norbert, Dr.-Ing., 20249 Hamburg (DE)
(72) Erfinder: Müller-Blanke, Norbert, Dr.-Ing., 20249 Hamburg (DE)
(74) Vertreter: Wilcken, Thomas, Dipl.-Ing.

(57) **Zusammenfassung**

Es wird ein Verfahren zum Rückhalten von in Wasser suspendierten, Biomasse bildenden Mikroorganismen in einem Becken (1), insbesondere von Belebtschlamm als Biomasse bei der biologischen Reinigung von Abwasser in einem Belebungsbecken (1), beschrieben. Hierbei bildet sich im Becken vor einem Ablauf (3) ein aus Wasser und Biomasse bestehender Ablaufstrom (4) aus. Durch Flotation wird Biomasse von Wasser getrennt, indem an Flocken der Biomasse angelagerte, in ein Wasser/Biomasse-Gemisch eingetragene Gasblasen (5) die Flocken aufschwimmen lassen. Die Flotation wird unmittelbar im Becken (1) durchgeführt. Dabei werden die Gasblasen im Becken unterhalb des auf den Ablauf zulaufenden Ablaufstroms (4) in diesen eingetragen, während das Wasser über den Ablauf (3) unterhalb der flotierten, im Becken verbleibenden Flocken/Gasblasen-Agglomerate abgeführt wird.

## Beschreibung

Die Erfindung betrifft ein Verfahren zum Rückhalten von in Wasser suspendierten, Biomasse bildenden Mikroorganismen in einem Becken, insbesondere von Belebtschlamm als Biomasse bei der biologischen Reinigung von Abwasser in einem Belebungsbecken, bei dem sich im Becken vor einem Ablauf ein aus Wasser und Biomasse bestehender Ablaufstrom ausbildet und bei dem durch Flotation Biomasse von Wasser getrennt wird, indem an Flocken der Biomasse angelagerte. in ein Wasser/Biomasse-Gemisch eingetragene Gasblasen die Flocken aufschwimmen lassen.

Das Rückhalten von Biomasse im Belebtschlammverfahren bei der Abwasserreinigung erfolgt konventionell durch Sedimentation der Biomasse in Absetzbecken, die dem Belebungsbecken bzw. Reaktionsbehältern nachgeschaltet sind und aus denen abgesetzter Biomasseschlamm entsorgt und/oder als Rücklaufschlamm zum Belebungsbecken gepumpt wird, um dort bei Bedarf eine möglichst hohe Biomassekonzentration zu erreichen.

Dies ist ein relativ einfaches Verfahren, bei dem im Prinzip nur für das Fördern des Rücklaufschlamms Energie benötigt wird. Probleme kann es aber bei leichter Biomasse mit schlechtem Sedimentationsverhalten geben, da es dann zum Abtrieb von Biomasse bzw. Schlamm aus den Absetzbecken mit negativen Folgen für das Gewässer kommen kann, in welches das die Kläranlage verlassene Wasser geleitet werden soll. Dieser Nachteil tritt auch häufig bei hydraulischer Überlastung der Absetzbecken auf, also wenn etwa viel Regenwasser anfällt. Schließlich kann die Biomasse durch Sedimentation nur bis auf ca. 10g/l Trockensubstanz eingedickt werden, wodurch die Biomassekonzentration im Belebungsbecken nach der Verdünnung mit dem Zulaufwasser auf etwa 4g/l Trockensubstanz beschränkt ist.

In der Abwassertechnik werden auch Membranfilteranlagen anstelle von Absetz- bzw. Nachklärbecken zum Rückhalten von Biomasse eingesetzt. Hierbei wird das das Belebungsbecken verlassende Biomasse/Wasser- Gemisch mittels einer Pumpe in die externe Membranfilteranlage gefördert, in der durch eine Filtermembran die Biomasse vom Wasser getrennt wird. Die so gewonnene Biomasse wird als Rücklaufschlamm wieder zurück in das Belebungsbecken geleitet oder sonst zumindest teilweise als Überschufßschlamm entsorgt.

Da die Biomasse von der Membran im Prinzip vollständig zurückgehalten wird und als Rücklaufschlamm zur Verfügung steht, können im Belebungsbecken hohe Biomassekonzentrationen von 15g/l Trockensubstanz und mehr erreicht werden, so daß das Belebungsbecken verhältnismäßig klein gestaltet werden kann und/oder die Produktion von Überschußschlamm, die Entsorgungskosten zur Folge hat, verfahrensbedingt gering gehalten werden kann. Extrem hoch sind allerdings die Investitionskosten für eine solche Anlage und auch die laufenden Betriebskosten, die sich neben den Energiekosten vor allem durch die begrenzte Lebensdauer der teueren Membran ergeben.

Bei einer noch relativ selten praktizierten Variante zum Rückhalten von Biomasse werden Biomasse und Wasser durch Flotation getrennt (DE 41 29 586 A 1, DE 195 37 698 A 1), und zwar extern in einer dem Belebungsbecken nachgeschalteten Flotationskammer, in die aus den Belebungsbecken durch Pumpen abgezogenes Biomasse/Wasser-Gemisch, also Schlammwasser, gefördert wird und in der Flotationskammer mit mikrofeinen Luftblasen angereichert wird, die meist in Form einer Luft/Wasser-Dispersion unter Druck in die Flotationskammer und das in dieser befindliche Schlammwasser eingetragen werden. Dabei lagern sich die Luftblasen an den Schlammflocken an und tragen diese zur Oberfläche des Schlammwassers, wo sich die flotierten Schlammflocken zu einem Flotat ansammeln. Dieses hat eine relativ hohe Konzentration von etwa 30 bis 40g/l Trockensubstanz und kann mit Räumgeräten, Förderschnecken und dergleichen abgetragen werden, wobei auch hier wieder wie bei sonstigen bekannten Verfahren das Flotat als Überschußschlamm entsorgt oder zur Erhöhung der Biomassekonzentration im Belebungsbecken in dieses zurückgefördert werden kann.

Wegen der hohen Konzentration des Flotats können auch relativ hohe Biomassekonzentrationen von 15g/l Trockensubstanz und mehr im Belebungsbecken erreicht werden, wodurch dieses verhältnismäßig klein gestaltet werden kann, wenn man es nicht vorzieht, die Produktion von Überschußschlamm bei einem entsprechend groß zu bauenden Belebungsbecken und damit die Entsorgungskosten zu reduzieren. Im übrigen wird beim Flotationsverfahren insbesondere leichter Schlamm sicher zurückgehalten.

Durch den technischen Aufwand für die Räumung des Flotats aus der Flotationskammer und die Rückführung des dicken Flotatsschlamms in das Belebungsbecken ist dieses Verfahren allerdings recht aufwendig. Abgesehen von kostspieligen Investitionen für Geräte zum Räumen und Rückfördern des Flotats benötigen außerdem bekannte Anlagen zur Durchführung dieses Verfahrens viel Platz wegen der in bezug auf das Belebungsbecken externen Anordnung der Flotationskammer mit Zubehör, selbst wenn diese Kammer baulich an das Belebungsbecken angegliedert ist.

Durch die Erfindung soll ein das Flotationsprinzip anwendendes Verfahren zum Rückhalten von Biomasse in Becken vorgeschlagen werden, bei dem das Flotat zwar zur Erhöhung der Biomassekonzentration im Becken beitragen kann und soll, aber nicht gesondert als Rücklaufschlamm in das Becken gefördert werden muß, um schon so und auch dadurch zur Einsparung von Investionskosten und Platzbedarf zu kommen, daß keine gesondert zu fertigenden und extern aufzustellenden Flotationskammern erforderlich sind. Weiterhin soll insbesondere erreicht werden, daß es aufgrund des erfindungsgemäßen Verfahrens möglich wird, bestehende und gegebenenfalls nicht mehr voll funktionsfähige oder überlastete biologische Kläranlagen mit geringem Aufwand durch zusätzliche Anwendung des Flotationsprinzip zu sanieren bzw. zu entlasten.

Zur Lösung dieser Aufgabe wird das einleitend erwähnte Verfahren erfindungsgemäß so ausgestaltet, daß die Flotation im Becken selbst durchgeführt wird, daß die Gasblasen im Becken unterhalb des auf dem Ablauf zulaufenden Ablaufstroms in diesen eingetragen werden und daß Wasser über den Ablauf unterhalb der flotierten, im Becken verbleibenden Flocken/Gasblasen-Agglomerate abgeführt wird.

Bei diesem Verfahren wird also anders als bei der bekannten und in bezug auf den Ort des Beckens "externen Flotation" eine im Becken "integrierte Flotation" durchgeführt, bei der die Biomasse direkt im Becken zurückgehalten wird und dort unmittelbar zur Erhöhung der Biomassekonzentration verbleibt. An der Oberfläche wird das aufgeschwommene Flotat aufgrund der Strömungsturbulenzen im Becken durch Trennung der Gasblasen von den Schlammflocken aufgelöst.

Im übrigen entfällt der Platzbedarf und der technische Aufwand für eine externe Flotationseinrichtung und für Einrichtungen zum Räumen und Rückfördern des Flotats aus der Flotatskammer in das Becken. Im Vergleich hierzu ist der Aufwand vergleichsweise gering, der bei Anwendung des erfindungsgemäßen Verfahrens gegebenenfalls durch einen Einbau von Trenn- oder Leitwänden in das Becken anfällt, wenn etwa der Flotationsbereich durch solche Wände gegen Turbulenzen im übrigen Raum des Beckens abgeschottet werden soll.

So kann dann der Ablaufstrom im Flotationsbereich horizontal oder von oben nach unten gegen Turbulenzen im Becken abgeschottet geführt werden.

Im übrigen besteht die Möglichkeit, daß nur ein Teil des im Becken befindlichen Wasser/Biomasse-Gemisches als Ablaufstrom intern im Becken durch Flotation behandelt wird, während der andere Teil unbehandelt aus dem Becken abgeführt und extern durch Trennen der Biomasse vom Wasser gereinigt wird. Dies kommt vor allem auch für eine Sanierung oder Entlastung bestehender Kläranlagen in Betracht, wobei auch in diesem Fall die durch externe Reinigung anfallende Biomasse zumindest teilweise in das Becken zurückgeleitet werden kann.

Außerdem ist es zweckmäßig, wenn das aus dem Becken abgezogene und durch Flotation behandelte Wasser entgast wird, um danach einer weiteren Aufbereitung beispielsweise durch Sedimentation zugeführt zu werden. Diese Aufbereitung kann auch durch eine Membranfiltration erfolgen, wobei es dann vorteilhaft ist, der Filtermembran ein Schutzfilter vorzuschalten.

In der anliegenden Zeichnung sind einige Ausführungsbeispiele für Kläranlagen vereinfacht und schematisch dargestellt, bei denen das Verfahren nach der Erfindung zur Anwendung kommt und die nachfolgend beschrieben werden. Es zeigt:
- Fig. 1: den grundsätzlichen Aufbau einer mit dem erfindungsgemäßen Verfahren arbeitenden Kläranlage,
- Fig. 2: eine Möglichkeit zur Führung des Ablaufstroms im Gegenstrom zur Flotation,
- Fig. 3: eine weitere Möglichkeit zu Führung des Ablaufstroms im Querstrom zur Flotation,
- Fig. 4: eine Kläranlage mit einem dem Belebungsbecken nachgeschalteten Absetzbecken,
- Fig. 5: eine Kläranlage mit einer dem Belebungsbecken nachgeschalteten Membranfilteranlage und
- Fig. 6: eine Kläranlage, bei welcher einem Absetzbecken aus dem Belebungsbecken geklärtes und ungeklärtes Wasser zugeführt wird.

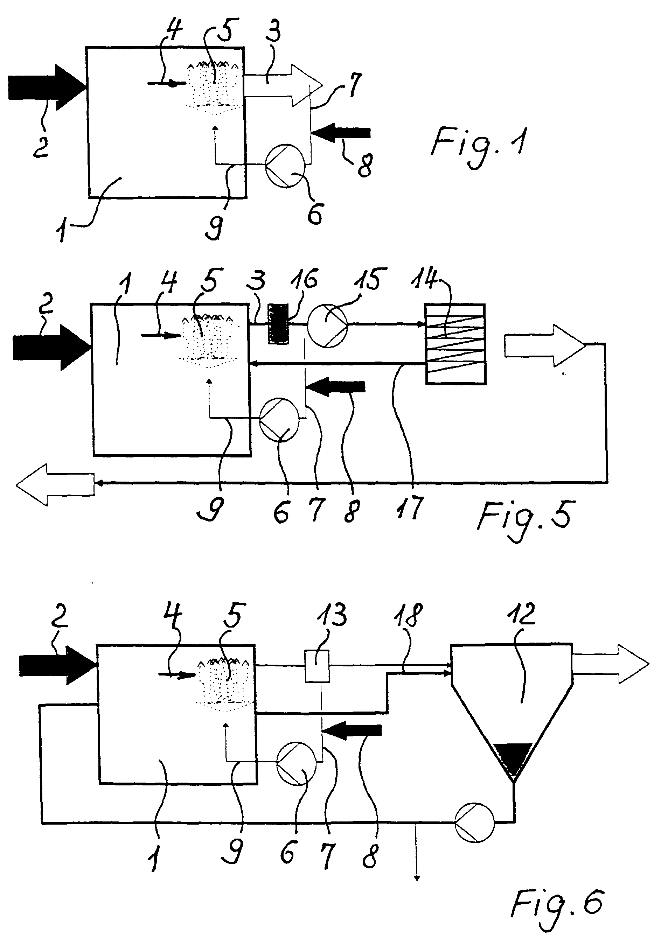

Bei der in Fig. 1 gezeigten Anlage wird dem Belebungsbecken bzw. Reaktor 1 über einen Zulauf 2 weitgehend feststofffreies Abwasser zugeführt und durch mikrobielle Umsetzung gereinigt. Im Belebungsbecken bildet sich ein aus Wasser und Biomasse bestehender Ablaufstrom 4 aus, in den in einem Flotationsbereich 5 Luftblasen eingetragen werden, und zwar unterhalb des auf einen Ablauf 3 zulaufenden Ablaufstroms 4. Das durch Flotation geklärte Wasser verläßt das Belebungsbecken über den Ablauf 3.

Die Luftblasen lagern sich an Schlammflocken des Ablaufsstroms ab und tragen diese nach oben zur Oberfläche, wie es durch die punktierten Pfeillinien im Flotationsbereich 5 angedeutet ist. Das sich am Wasserspiegel sammelende Flotat mit hoher Biomassekonzentration wird durch stets vorhandene Strömungen und Turbulenzen im Belebungsbecken zerteilt, wobei die Luftblasen wieder von den flotierten Schlammflocken getrennt werden. Falls die vorhandenen Turbulenzen im Becken nicht ausreichen, können zusätzliche Turbulenzen erzeugt werden, um Schlammflocken und Luft- bzw. Gasblasen zu trennen.

Die Luftblasen gelangen in das Belebungsbecken 1 über eine Pumpe 6 in Form einer Luft/Wasser-Dispersion, deren Wasseranteil in diesem Fall dem Ablauf 3 durch eine Leitung 7 entnommen wird, in welche der Luftanteil mittels einer üblichen und nur schematisch mit dem Pfeil 8 angedeuteten Einrichtung eingeführt wird. Die Pumpe 6 ist druckseitig mit einer Leitung 9 verbunden, durch die das Gemisch aus Luftblasen und Wasser von unten über einen Verteiler in den Flotationsbereich 5 gefördert wird.

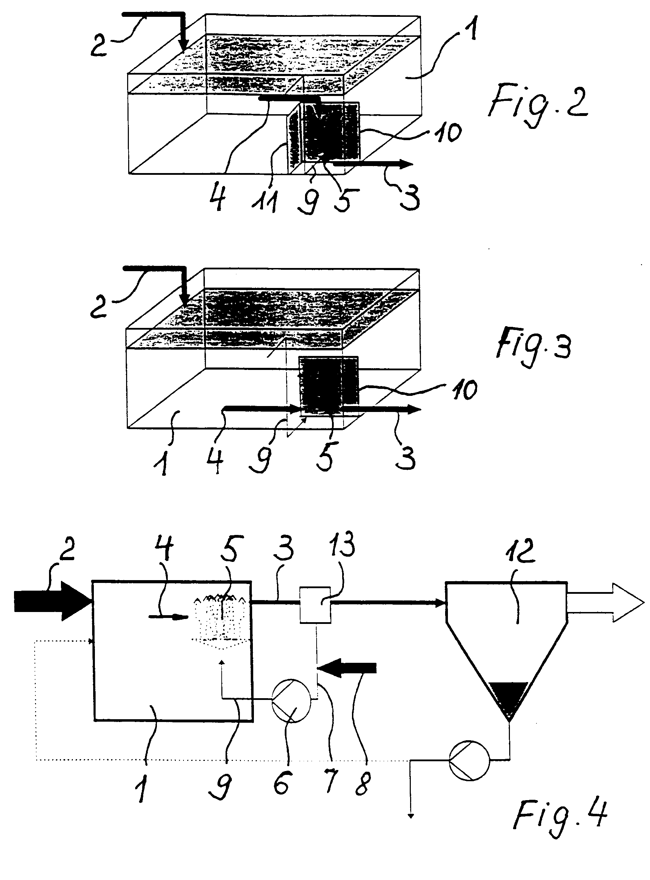

Soweit diese beschriebenen Anlagenteile auch bei den anderen dargestellten Anlagen zum Einsatz kommen und dort die gleiche Funktion ausüben, sind diese auch in den weiteren Figuren 2 bis 6 mit den gleichen Bezugszeichen versehen.

Bei der Anlage nach Fig. 2 wird der Ablaufstrom 4 im Gegenstrom von oben nach unten gegen den aufsteigenden Luftblasenstrom im Flotationsbereich 5 geführt (Gegenstromprinzip), der mit zwei Trennwänden 10,11 gegen Turbulenzen im übrigen Raum des Belebungsbeckens 1 abgeschottet ist.

Im Gegensatz hierzu wird bei der Anlage gemäß Fig. 3 der Ablaufstrom 4 horizontal und somit quer zum aufsteigenden Luftblasenstrom in den Flotationsbereich 5 geleitet (Querstromprinzip), der in diesem Fall nur mit einer parallel zum Querstrom stehenden Trennwand 10 abgeschottet ist.

Bei der in Fig. 4 gezeigten Anlage ist dem Belebungsbecken 1 ein Absetzbecken 12 nachgeordnet, wobei in der Verbindung zwischen beiden Becken 1 und 12 eine Entgasungseinrichtung 13 vorgesehen ist, die das aus dem Belebungsbecken kommende und noch nachzuklärende Wasser entgast, damit im Absetzbecken 12, wo die Biomasse durch Sedimentation anfallen soll, keine Flotationserscheinungen auftreten. Überschüssiger Schlamm kann durch eine unten an das Absetzbecken 12 angeschlossene Pumpe abgefördert und entsorgt werden. Über diese Pumpe könnte natürlich auch Rücklaufschlamm in das Belebungsbecken 1 gefördert werden.

Bei der Kläranlage nach Fig. 5 wird im Belebungsbecken 1 durch Flotation vorgeklärtes Wasser einer Membranfilteranlage 14 zugeführt, und zwar mittels einer Pumpe 15 und über ein Pilotfilter 16 als Schutzfilter für die Filtermembran. Aus der Filteranlage 14 kann auch in diesem Fall über die Leitung 17 Rücklaufschlamm in das Belebungsbecken 1 zwecks Erhöhung der Biomassekonzentration in diesem Becken geleitet werden.

Im Gegensatz zum direkten Anschluß einer Membrananlage an den Reaktor bzw. das Belebungsbecken kann in diesem Fall eine andere, technisch und ökonomisch vorteilhaftere Membrananlage eingesetzt werden, da die Feststoffe (Biomasse) vorher durch Flotation weitgehend entfernt wurden.

Schließlich zeigt die Fig. 6 eine Anlage, die ähnlich wie die in Fig. 4 gezeigte aufgebaut ist, bei der aber nur ein Teil des im Belebungsbecken 1 befindlichen Wasser/Biomasse-Gemisches als Ablaufstrom 4 intern im Belebungsbecken durch Flotation behandelt wird, während der andere Teil unbehandelt aus dem Belebungsbecken über die Leitung 18 in das Absetzbecken 12 gelangt und somit extern durch Trennen der Biomasse von Wasser gereinigt wird. Auch in diesem Fall und aus schon vorher im Zusammenhang mit der Anlage gemäß Fig. 4 genannten Gründen ist eine Entgasungseinrichtung 13 in die Verbindung zwischen Belebungsbecken 1 und Absetzbecken 12 geschaltet.

Bei den Kläranlagen gemäß den Figuren 4 bis 6 kann es sich um bestehende Anlagen mit Belebungsbecken mit angeschlossenen Absetzbecken oder Membranfilteranlagen handeln, die mit einer Einrichtung zur Durchführung des erfindungsgemäßen Verfahrens nachgerüstet sind für den Fall, daß vorhandene Anlagen überlastet oder aus anderen Gründen nicht mehr voll funktionsfähig sind.

Das Verfahren kann in typischen offenen oder geschlossenen Becken und in jedem sonstigen Becken mit einem Reaktorraum durchgeführt werden, also auch in Kesseln, Behältern und anderen geeigneten Reaktoren, wobei bei einem Belebungsverfahren die mikrobielle Umsetzung von gelösten organischen Stoffen unter Zugabe von Sauerstoff erfolgt. Bei anderen mikrobiellen Prozessen, wie z. B. solche, die anaerob ohne Sauerstoffzufuhr ablaufen, wird das erfindungsgemäße Verfahren ohne Sauerstoffzugabe durchgeführt, wobei zur Flotation von Schlammflocken gegebenenfalls nicht Luft, sondern beim anaeroben Reaktionsprozeß anfallendes Faulgas oder sonstige Gase und Gasgemische eingesetzt werden können.

## Patentansprüche

1. Verfahren zum Rückhalten von in Wasser suspendierten, Biomasse bildenden Mikroorganismen in einem Becken, insbesondere von Belebtschlamm als Biomasse bei der biologischen Reinigung von Abwasser in einem Belebungsbecken, bei dem sich im Becken vor einem Ablauf ein aus Wasser und Biomasse bestehender Ablaufstrom ausbildet und bei dem durch Flotation Biomasse von Wasser getrennt wird, indem an Flocken der Biomasse angelagerte, in ein Wasser/Biomasse-Gemisch eingetragene Gasblasen die Flocken aufschwimmen lassen, dadurch gekennzeichnet, daß die Flotation im Becken selbst durchgeführt wird, daß die Gasblasen im Becken unterhalb des auf den Ablauf zulaufenden Ablaufstroms in diesen eingetragen werden und daß Wasser über den Ablauf unterhalb der flotierten, im Becken verbleibenden Flocken/Gasblasen-Agglomerate abgeführt wird.

2. Verfahren nach Anspruch 1, dadurch gekennzeichnet, daß der Ablaufstrom im Flotationsbereich horizontal und gegen Turbulenzen im Becken abgeschottet geführt wird.

3. Verfahren nach Anspruch 1, dadurch gekennzeichnet, daß der Ablaufstrom im Flotationsbereich gegen Turbulenzen im Becken abgeschottet von oben nach unten geführt wird.

4. Verfahren nach einen der Ansprüche 1 bis 3, dadurch gekennzeichnet, daß nur ein Teil des im Becken befindlichen Wasser/Biomasse-Gemisches als Ablaufstrom intern im Becken durch Flotation behandelt wird, während der andere Teil unbehandelt aus dem Becken abgeführt und extern durch Trennen der Biomasse von Wasser gereinigt wird.

5. Verfahren nach Anspruch 4, dadurch gekennzeichnet, daß die durch externe Reinigung anfallende Biomasse zumindest teilweise in das Becken geleitet wird.

6. Verfahren nach einem der Ansprüche 1 bis 5, dadurch gekennzeichnet, daß das aus dem Becken abgezogene Wasser entgast und dann einer weiteren Aufbereitung, insbesondere durch Sedimentation, zugeführt wird.

7. Verfahren nach einem der Ansprüche 1 bis 5, dadurch gekennzeichnet, daß das aus dem Becken abgezogene Wasser über eine Membranfiltration weiter aufbereitet wird.

8. Verfahren nach Anspruch 7, dadurch gekennzeichnet, daß vor der Membranfiltration eine Filterung mittels eines Pilotfilters durchgeführt wird.

9. Verfahren nach einem der Ansprüche 1 bis 8, dadurch gekennzeichnet, daß aus einem anaeroben Reaktionsprozeß gewonnenes Faulgas zur Erzeugung der Gasblasen verwendet wird.
